# EUROPEAN PATENT APPLICATION

(11) **EP 4 067 959 A1**
(43) Date of publication of application: **05.10.2022**
(21) Application number: 21199836.4
(22) Date of filing: 29.09.2021
(51) Int. Cl.: G02B 6/44

(54) **OPTICAL FIBRE ENCLOSURE WITH STAGGERED PORTS**

(30) Priority: 31.03.2021 IN 202111015013
(71) Applicant: Sterlite Technologies Limited, Haryana 122002 (IN)
(72) Inventor: LEEMAN, Sam, 3010 Kessel-Lo (BE); KUMAR, Shantha, 122002 Haryana (IN); BALACHANDRAN, Binod, 122002 Haryana (IN)
(74) Representative: Hepworth Browne

(57) **Abstract**

An optical fibre enclosure (200) comprises a housing (204) coupled with a base panel (202) and a plurality of staggered ports (208) housed on a front surface of the housing (204). In particular, the plurality of staggered ports (208) is arranged in two or more columns (216) and two or more rows (218) such that the plurality of staggered ports (208) in the two or more columns (216) is aligned to one or more column axes (220) and the plurality of staggered ports in adjacent rows is not aligned to one or more row axes (222) creating a space (212) at a lower portion of at least one of the two or more columns (216).

## Description

### TECHNICAL FIELD

Embodiments of the present disclosure relate to a field optic fibre cable telecommunication system. And more particularly, relates to an optical fibre enclosure with staggered ports.

This application claims the benefit of Indian Application No. 202111015013 titled "Optical Fibre Enclosure with Staggered Ports" filed by the applicant on 31st march 2021, which is incorporated herein by reference in its entirety.

### Background Art

A distributed fibre network typically includes a large network of installed optical fibre cables connected to multiple electronic and mechanical devices. The optical fibre cables initiate from multiple terminals and are periodically opened and spliced for allowing data to be distributed to other cables in branches of the distributed fibre network. The optical fibre cables' branches may be further distributed until the distributed fibre network reaches individual homes, businesses, offices, premises, and the like with use of telecommunications closures/enclosure such as splice (en)closures. The optical fibre cables in the distributed fibre network may be installed on different support structures like walls, poles and underground structures and environments.

Traditionally, different telecommunications closures with application specific designs are required for each support structure. The different closure designs are required for different mounting orientations like horizontal and vertical orientations. Additional splitter enclosures are required for signal distribution into multiple fibres. The use of different closures with different strength and performance for different installation environments poses a challenge in clamping and securing a fibre reinforced plastic (FRP) central loose tube cable within a very less space inside 8 Port/12 Port and 4 Port terminals.

For example, a few prior art references "US10830975B2", "US20130022328A1" and "US8363999B2" disclose an optical fibre enclosure where ports are unaligned in a horizontal plane.

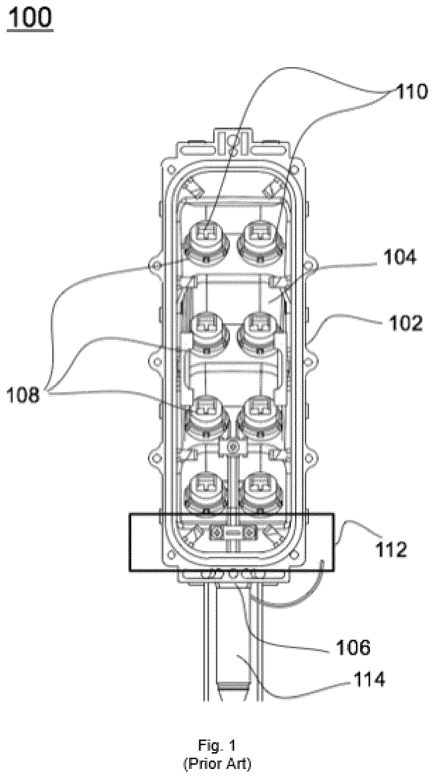

Hereinafter, related art for Passive optical network (PON) architecture will be described with reference to Fig. 1 in order to facilitate an understanding of the inventive concept. Fig. 1 is a pictorial snapshot illustrating an optical fibre enclosure having ports in accordance with the prior art. The optical fibre enclosure 100 includes a base panel 102 and a housing 104 coupled with the base panel 102. Further, the optical fibre enclosure 100 includes a receiving channel 106. The base panel 102 is usually of flat shape. The base panel 102 is installed or mounted on poles, walls or any suitable infrastructures using fasteners, screws, adhesives or the like. The base panel 102 is configured to retain a sealing device, such as gasket or the like, along a base mounting platform. The base mounting platform is coupled to a housing mounting platform of the housing 104. In an implementation, the housing 104 is permanently coupled to the base panel 102. In another implementation, the housing 104 is releasably attached to the base panel 102. The housing 104 is coupled to the base panel 102 by, but not limited to, fasteners, screws, retainers, snap-in configuration.

An inner cavity of the housing 104 has space to allow placement, management and storage of a plurality of optical fibres. The housing 104 includes a plurality of ports 108 on its front surface. The plurality of ports 108 is an output port or output receptacle. The plurality of ports 108 includes capability of receiving a connector. The plurality of ports 108 includes a plurality of plugs 110 to prevent the plurality of optical fibres getting damaged from moisture or dirt. That is, each of the plurality of ports 108 includes its corresponding plug. The plurality of ports 108 receives the plurality of optical fibres via the receiving channel 106.

Further, the plurality of ports 108 is placed in such a way that there is no or very less space (space is depicted by 112) for one or more components of an optical fibre cable 114. The arrangement of the plurality of ports 108 is structured in a conventional straight line/row that occupies most of the space inside the optical fibre enclosure 100. Further, to prepare the plurality of optical fibres present inside the optical fibre cable 114 for connecting the plurality of optical fibres to the plurality of ports 108, a technician has to go through a lot of hassle to remove sheath of the optical fibre cable 114 for further connectivity.

Hence, the present disclosure focuses on providing a unique design of the optical fibre enclosure with a unique arrangement of the plurality of ports to provide extra space at the bottom of the optical fibre enclosure, where the optical fibre cable enters from the side, not from middle.

While the prior arts cover various approaches to overcome the above stated drawbacks, still there is an urgent need for a technical solution that overcomes the above stated limitations in the prior arts to counter drawbacks associated with challenges in clamping and securing the FRP central loose tube cable within the very less or no space inside the 8 Port/12 Port and 4 Port terminals. Thus, in light of the above-stated discussion, there exists a need to overcome the above stated disadvantages.

Any references to methods, apparatus or documents of the prior art are not to be taken as constituting any evidence or admission that they formed, or form part of the common general knowledge.

### SUMMARY OF THE DISCLOSURE

Embodiments of the present disclosure provide an optical fibre enclosure with staggered ports.

According to a first aspect of the present disclosure, the optical fibre enclosure with a housing coupled with a base panel and a plurality of staggered ports housed on a front surface of the housing. In particular, the plurality of staggered ports is arranged in two or more columns and two or more rows such that the plurality of staggered ports in the two or more columns is aligned to one or more column axes and the plurality of staggered ports in adjacent rows is not aligned to one or more row axes creating a space at a lower portion of at least one of the two or more columns.

In accordance with an embodiment of the present disclosure, the space is configured to mount a cable clamp.

According to the second aspect of the present disclosure, the optical fibre cable enters the optical fibre enclosure from a side of the optical fibre enclosure.

According to the third aspect of the present disclosure, the cable clamp is configured to accommodate an optical fibre cable received at the optical fibre enclosure.

In accordance with an embodiment of the present disclosure, the optical fibre cable is received via a receiving channel.

In accordance with an embodiment of the present disclosure, the plurality of staggered ports is removably associated with a plurality of plugs.

According to the fourth aspect of the present disclosure, the optical fibre enclosure comprises a 2X6 matrix terminal. In particular, the 2X6 matrix terminal is configured with 12 ports.

According to the fifth aspect of the present disclosure, the optical fibre enclosure comprises a 3X6 matrix terminal. In particular, the 3X6 matrix terminal is configured with 18 ports.

In accordance with an embodiment of the present disclosure, an inner cavity of the housing is configured to allow placement, management and storage of the plurality of optical fibres.

In accordance with an embodiment of the present disclosure, the plurality of staggered ports are configured to receive an optical fibre connector.

In accordance with an embodiment of the present disclosure, the optical fibre enclosure is a plastic optical fibre enclosure.

In accordance with an embodiment of the present disclosure, the optical fibre enclosure is in a rectangular shape.

In accordance with an embodiment of the present disclosure, a housing may be permanently coupled or removably attached to the base panel.

In accordance with an embodiment of the present disclosure, the plurality of staggered ports is of any shape selected from a circular shape, a polygonal shape or the like.

According to the sixth aspect of the present disclosure, the plurality of staggered ports are arranged in a staggered or zig-zag pattern. Particularly, the zig-zag pattern is defined by an angle 'a'. The angle 'a' is an angle of the zig-zag pattern for placing the two or more rows of the plurality of staggered ports.

According to the seventh aspect of the present disclosure, the optical fibre enclosure further comprises a cable clamp placed in the space to accommodate an optical fibre cable received at the optical fibre enclosure via a receiving channel. The space is utilized to accommodate a cable clamp.

In accordance with an embodiment of the present disclosure, the unique staggered arrangement creates extra space at the lower portion and at the upper portion of the optical fibre enclosure. This extra space is utilized to prepare a plurality of optical fibres present inside the optical fibre cable for connecting the plurality of optical fibres to the plurality of staggered ports. The extra space can clamp the optical fibre cable inside the optical fibre enclosure using the cable clamp and easily organize the optical fibre cable to expose the plurality of optical fibres for further connectivity.

The foregoing solutions of the present disclosure are attained by employing an optical fibre enclosure with staggered ports

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 illustrates an optical fibre enclosure having ports in accordance with a disclosed prior art;
Fig. 2 is a pictorial snapshot illustrating an optical fibre enclosure with a staggered ports and a cable clamp in accordance with an embodiment of the present disclosure;
Fig. 3 is a pictorial snapshot illustrating the staggered ports in accordance with an embodiment of the present disclosure;
Fig. 4 is a pictorial snapshot illustrating the staggered ports in accordance with an embodiment of the present disclosure;
Fig. 5 is a pictorial snapshot illustrating the staggered ports in accordance with an embodiment of the present disclosure;
Fig. 6 is a pictorial snapshot illustrating the staggered ports in accordance with an embodiment of the present disclosure;
Fig. 7 is a pictorial snapshot illustrating an exemplary 3X6 optical fibre enclosure with the staggered ports and the cable clamp in accordance with an embodiment of the present disclosure;
Fig. 8 is a pictorial snapshot illustrating an exemplary 3X4 optical fibre enclosure with the staggered ports and the cable clamp in accordance with an embodiment of the present disclosure.

### REFERENCE LIST

Optical Fibre Cable 114
Optical Fibre Enclosure 200
Base Panel 202
Housing 204
Housing Base 204a
Housing Wall 204b
Receiving Channel 206
Plurality Of Staggered Ports 208
Plurality Of Plugs 210
Protruded Slanted Wall 210a
Two Support Walls 210b
Extra Space 212
Cable Clamp 214
Optical Fibre Enclosure 400

The optical fiber illustrated in the accompanying drawings, which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### Following terms shall apply throughout the present disclosure:

Optical fibre refers to a medium associated with signal transmission over long distances in the form of light pulses.

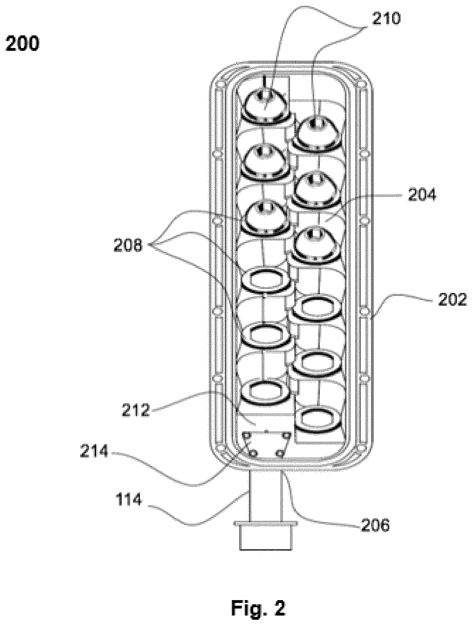

Referring to Fig. 2, an optical fibre enclosure with staggered ports and a cable clamp in accordance with an embodiment of the present disclosure. In passive optical networks or fibre access networks, an optical fibre may be routed to a user's premise via the optical fibre enclosure 200. Particularly, the optical fibre enclosure 200 may be made of plastic or other suitable materials. Moreover, the optical fibre enclosure 200 may be made ultra-violet and weather resistant to avoid damages caused by the outside environment. Further, the optical fibre enclosure 200 may be deployed in or mounted on infrastructures such as poles, pedestal or the like.

The optical fibre enclosure 200 may be of rectangular shape. Alternatively, the optical fibre enclosure 200 may be of any other suitable shape. The optical fibre enclosure 200 may be, but not limited to, a 2X6 matrix terminal. That is, the optical fibre enclosure 200 may have a plurality of staggered ports formed in configurations like 2 columns, 12 ports (2 X 6) matrix as shown in Fig. 2 to 6.

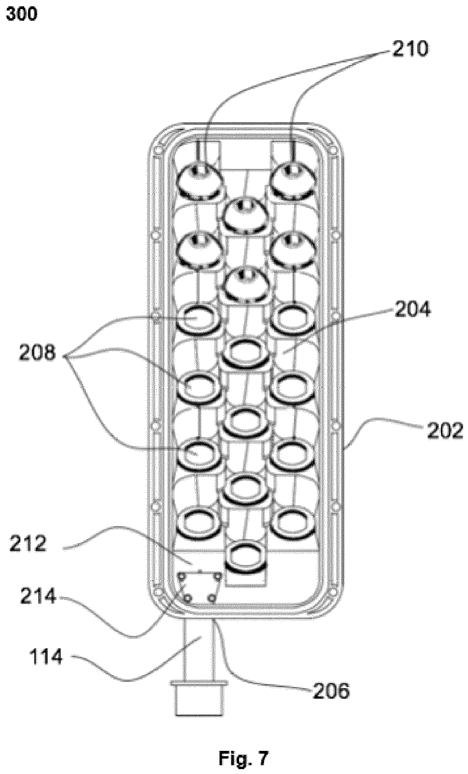

Alternatively, the optical fibre enclosure 200 may have 3 columns, 18 ports (3 X 6) matrix as shown in Fig. 7. For illustration purposes 2X6 matrix and 3X6 matrix optical fibre enclosures have been used. Alternatively, more configurations may be adopted, for instance 2X2, 2X4, 2X6, 3X4, 4X6, 5X6 or the like.

Further, the optical fibre enclosure 200 may include a base panel 202 and a housing 204 coupled with the base panel 202. And, the optical fibre enclosure 200 may include a receiving channel 206.

In particular, the base panel 202 may usually be of flat shape. Other shapes are also possible. Moreover, the base panel 202 may correspond to a base structure for incorporating all components of the optical fibre enclosure 200. Subsequently, the base panel 202 may also correspond to an outer body of the optical fibre enclosure 200. Further, the base panel 202 may be installed or mounted on poles, walls or any suitable infrastructures using fasteners, screws, adhesives or the like. The base panel 202 may be configured to retain a sealing device, such as a gasket or the like, along a base mounting platform.

In particular, the base mounting platform may be coupled to a housing mounting platform of the housing 204. The housing 204 may be permanently coupled to the base panel 202. Alternatively, the housing 204 may be releasably attached to the base panel 202. The housing 204 may be coupled to the base panel 202 by, but not limited to, fasteners, screws, retainers, snap-in configuration.

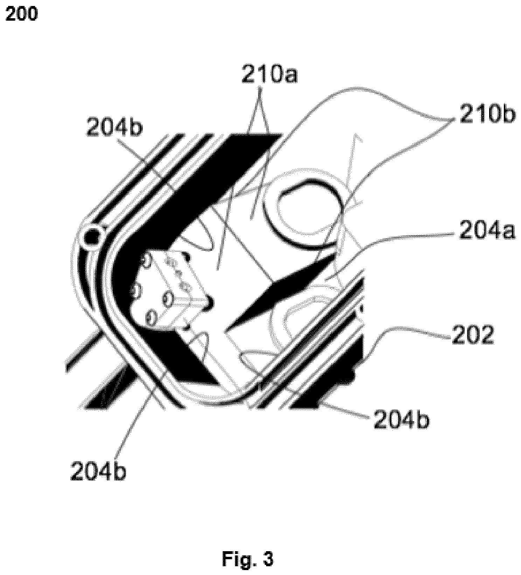

Referring to Fig. 3, the housing 204 may have a housing base 204a and the housing base 204a may be coupled with a housing wall 204b. In particular, the housing base 204a and the housing wall 204b may form an inner cavity/channel i.e., the housing 204 on which the plurality of staggered ports 208 may be formed. The inner cavity of the housing 204 has enough space to allow placement, management and storage of a plurality of optical fibres. The housing 204 may include the plurality of staggered ports 208 on its front surface. Further, the plurality of staggered ports 208 may be formed on a structure on the front surface of the housing i.e., the housing base 204a that may have a protruded slanted wall 210a on which an output port or receptacle of each of the plurality of the staggered ports 208 for receiving one or more optical fibre connectors may be present.

The protruded slanted wall 210a may be supported by two support walls 210b. The plurality of staggered ports 208 may include capability of receiving the one or more optical fibre connectors. The plurality of staggered ports 208 may removably be associated with a plurality of plugs 210 to prevent the plurality of optical fibres getting damaged from moisture or dirt. That is, each of the plurality of staggered ports 208 may include it's corresponding plug. The plurality staggered ports 208 may have a circular shape, a polygonal shape or the like.

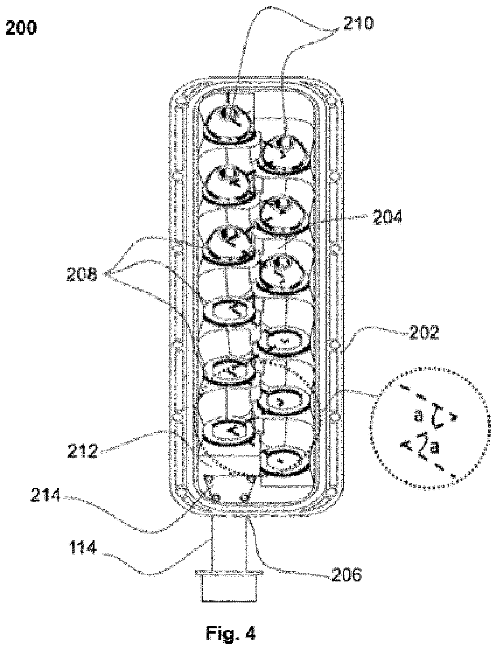

Referring to Fig.4, the plurality of staggered ports 208 may be arranged in a zig-zag manner in the housing 204. The zig-zag pattern line (shown using dashed lines) traverses and connects centres of each of the plurality of staggered ports. Such zig-zag arrangement may be referred as staggered placement or arrangement in accordance with the present disclosure. The staggered placement or zig-zag arrangement of the plurality of staggered ports may be defined by an angle 'a'. The angle 'a' is an angle of staggering pattern or zig-zag pattern at which two or more rows of the plurality of staggered ports may be placed in succession to each other.

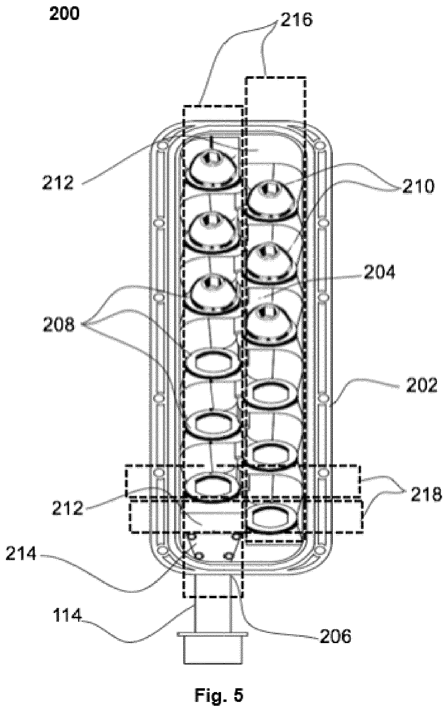

Referring to Fig. 5 and Fig. 7, the plurality of staggered ports 208 may be arranged in two or more columns 216 (shown using dashed lines) and the two or more rows 218 (shown using dashed lines). Particularly, the plurality of staggered ports 208 may be arranged in the two or more columns 216 and the two or more rows 218 such that the plurality of staggered ports 208 in the two or more columns 216 may be aligned to one or more column axes 220 (shown using dashed line).

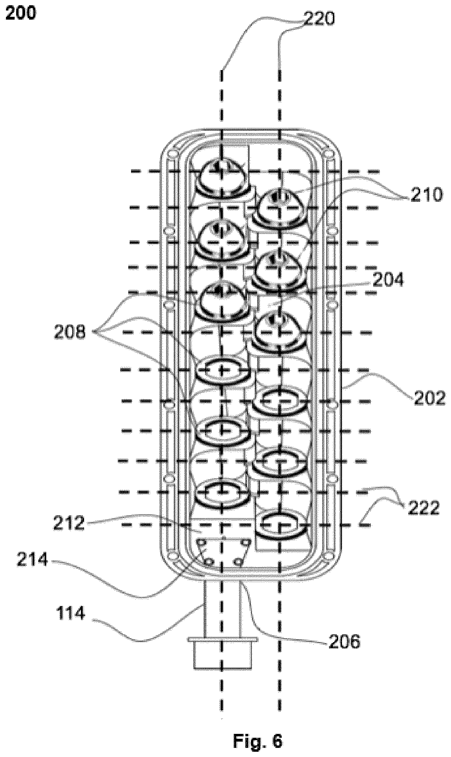

Referring to Fig. 6, the plurality of staggered ports 208 in adjacent rows may not be aligned to one or more row axes 222 (shown using dashed line).

In an exemplary example, a first column of the two or more columns 216 has the plurality of staggered ports 208 aligned (vertically aligned) to a common axis. Similarly, a second column of the two or more columns 216 has the plurality of staggered ports 208 aligned (vertically aligned) to another common axis and so on so forth. This arrangement depicts that the plurality of staggered ports 208 in the two or more columns 216 is aligned to the one or more column axes 220. Contrarily, a first row (considered from bottom of the optical fibre enclosure 200) of the two or more rows 218 has the plurality of staggered ports 208 unaligned (i.e., not horizontally aligned) to a common axis. Similarly, a second row (just above the first row) of the two or more rows 218 has the plurality of staggered ports 208 unaligned (i.e., not horizontally aligned) to another common axis and so on so forth. This arrangement depicts that the plurality of staggered ports 208 in the two or more columns 216 is aligned to the one or more column axes 220 and the plurality of staggered ports 208 in the adjacent rows is not aligned to the one or more row axes 222. Such arrangement of the plurality of staggered ports 208 thereby creates a space 212 at a lower portion of at least one of the two or more columns 216.

In other words, the plurality of staggered ports 208 is a plurality of ports arranged in staggered or zig-zag manner is a unique staggered arrangement that creates/provides extra space depicted by 212 at the lower portion of the optical fibre enclosure 200. The extra space is utilized to prepare the plurality of optical fibres present inside the optical fibre cable 114 for connecting the plurality of optical fibres to the plurality of staggered ports 208. A technician, by utilizing the extra space 212, may clamp the optical fibre cable 114 inside the optical fibre enclosure 200 using the cable clamp 214. The cable clamp 214 may clamp and secure the one or more components such as optical fibres, strength member or the like of the optical fibre cable 114 for unobstructed and safe distribution of the optical fibre cable 114. In other words, the cable clamp 214 may be installed/mounted in the space 212 that helps in easily organizing the optical fibre cable 114 to expose the plurality of optical fibres for further connectivity. The plurality of staggered ports 208 may receive the plurality of optical fibres via the receiving channel 206.

In accordance with an embodiment of the present disclosure, the plurality of optical fibres may be single-mode optical fibres or multi-mode optical fibres. The plurality of optical fibres may be of ITU.T G.657A1 category. Alternatively, the plurality of optical fibres may be of ITU.T G.657A2 category. Alternatively, the plurality of optical fibres may be of G.657B3 category. Alternatively, the plurality of optical fibres may be of G.652D category. Alternatively, the plurality of optical fibres may be of any other category.

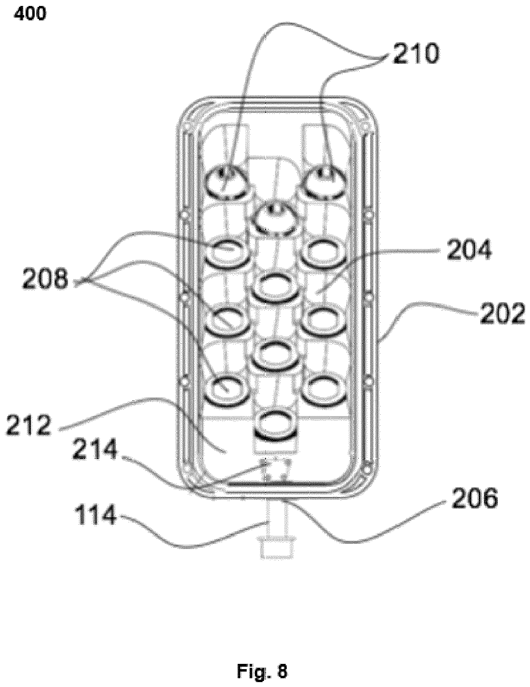

Referring to Fig. 8 illustrating an exemplary 3X4 optical fibre enclosure with the staggered ports and the cable clamp in accordance with an embodiment of the present disclosure. In particular, the 3x4 configuration has 3 columns and 12 ports, and the entry of the optical fibre cable 114 may be in the middle of the optical fibre enclosure 400. Alternatively, the entry of the optical fibre cable 114 may not be in the middle of the optical fibre enclosure 400.

The present disclosure for an optical fibre enclosure with staggered ports secures one or more components of an optical fibre cable within very less (or compact) space inside the optical fibre enclosure and provides space in the optical fibre enclosure with staggered ports to place clamp without increasing width of the optical fibre enclosure. Thus, the optical fibre cable enters the optical fibre enclosure from the side, not from the middle.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

It is to be understood that the terms so used are interchangeable under appropriate circumstances and embodiments of the disclosure are capable of operating according to the present disclosure in other sequences, or in orientations different from the one(s) described or illustrated above.

## Claims

1. An optical fibre enclosure (200), **characterized in that**:
a housing (204) coupled with a base panel (202); and
a plurality of staggered ports (208) housed on a front surface of the housing (204), wherein the plurality of staggered ports (208) is arranged in two or more columns (216) and two or more rows (218) such that the plurality of staggered ports (208) in the two or more columns (216) is aligned to one or more column axes (220) and the plurality of staggered ports in adjacent rows is not aligned to one or more row axes (222) creating a space (212) at a lower portion of at least one of the two or more columns (216).

2. The optical fibre enclosure (200) as claimed in claim 1, wherein the space (212) is configured to mount a cable clamp (214).

3. The optical fibre enclosure (200) as claimed in claim 1or claim 2, wherein an optical fibre cable (114) enters the optical fibre enclosure (200) from a side surface of the optical fibre enclosure (200).

4. The optical fibre enclosure (200) as claimed in any preceding claim, wherein the cable clamp (214) is configured to accommodate an optical fibre cable (114) received at the optical fibre enclosure (200).

5. The optical fibre enclosure (200) as claimed in claim 4, wherein the optical fibre cable (114) is received via a receiving channel (206).

6. The optical fibre enclosure (200) as claimed in any preceding claim, wherein the plurality staggered ports (208) is removably associated with a plurality of plugs (210).

7. The optical fibre enclosure (200) as claimed in any preceding claim, wherein the optical fibre enclosure (200) comprises a 2X6 matrix terminal with 12 ports.

8. The optical fibre enclosure (200) as claimed in any preceding claim, wherein an inner cavity of the housing (104) is configured to allow placement, management and storage of the plurality of optical fibres.

9. The optical fibre enclosure (200) as claimed in any preceding claim, wherein the plurality of staggered ports (208) are configured to receive an optical fibre connector.

10. The optical fibre enclosure (200) as claimed in any preceding claim, wherein the optical fibre enclosure 200 is a plastic optical fibre enclosure.

11. The optical fibre enclosure (200) as claimed in any preceding claim, wherein the optical fibre enclosure (200) is in a rectangular shape.

12. The optical fibre enclosure (200) as claimed in any preceding claim, wherein a housing (204) may be permanently coupled or removably attached to the base panel (202).

13. The optical fibre enclosure (200) as claimed in any preceding claim, wherein the plurality staggered ports (208) is of any shape selected from a circular shape, a polygonal shape or the like.

14. The optical fibre enclosure (200) as claimed in any preceding claim, wherein the optical fibre enclosure (200) comprises a 3X6 matrix terminal with 18 ports.

15. The optical fibre enclosure (200) as claimed in any preceding claim wherein the plurality of staggered ports (208) are arranged in a staggered or zig-zag pattern and the zig-zag pattern is defined by an angle 'a'.
